# EUROPEAN PATENT SPECIFICATION

(11) **EP 2 255 360 B1**
(45) Date of publication and mention of the grant of the patent: **02.01.2013**
(21) Application number: 09718939.3
(22) Date of filing: 11.03.2009
(51) Int. Cl.: G11B 33/04, E05B 73/00, B65D 43/26

(54) **A CONTAINER**
BEHÄLTER
Conteneur

(30) Priority: 14.03.2008 GB 0804733
(43) Date of publication of application: 01.12.2010
(73) Proprietor: Atlas AGI Holdings, LLC, Greenwich CT 06830 (US)
(72) Inventor: FARRAR, Peter, A., Menston, Yorkshire LS29 6EX (GB); MADDOX, Sean, Stamford, Lincolnshire PE9 2DG (GB); MARRIOTT, Mark, R., Lutterworth Leicestershire LE17 6PY (GB)
(74) Representative: Coulson, Elizabeth Eve
(86) International application number: PCT/US2009/036757
(87) International publication number: WO 2009/114594

(56) References cited:
- EP-A1- 0 004 977
- EP-A1- 0 444 384
- WO-A1-2004/018811
- WO-A1-2006/027580
- FR-A1- 2 722 028
- GB-A- 2 411 392
- US-A- 4 547 006
- US-A1- 2002 046 963
- US-A1- 2003 000 852
- US-A1- 2003 116 455
- US-A1- 2003 121 296
- US-A1- 2007 000 797

## Description

### REFERENCE TO RELAYED APPLICATIONS

This application claims the benefit of priority of Great Britain patent application serial number 0804733.4 filed on March 14, 2008.

### BACKGROUND OF THE INVENTION

This invention relates to a container and, more particularly, a container for securely housing goods in a retail outlet. The invention also relates to such a container in combination with an actuating device insertable therein.

A variety of security devices are known for securing containers, such as those used for housing CDs or DVDs, in a closed position are known. In some cases, the container is adapted to receive a security device inserted therein to lock the container in the closed position. Examples of such a device are disclosed in WO02/39451. Such devices can be very effective but the security device may secure a base and lid portion of the container together only in a localised area. The container may thus remain vulnerable to being prised open at positions away from the area in which the security device engages the lid and base portions.

Other security devices are known in which the lid and base portion of a container are secured together along the length of one side thereof, typically the side opposite a hinge portion joining the lid and base portions.

The present invention seeks to enhance the security provided by a security device such as that described in WO02/39451 referred to above.

US Patent Application US2003/0000852A1 discloses a lockable box comprising a first box member and second box member moveable between open and closed positions, a pair of locking members located within the lockable box each movable between a locked position in which it engages upstanding lugs of both the first and second box members, when in the closed position, so as to prevent them being moved to the open position and an unlocked position in which it does not prevent the first and second box members being moved to the open position, which actuating portions are located within the lockable box.

US 2002/0046963 to Belden et al discloses a lockable media storage box including a base and a lid. The base and lid comprise elements that allow the lid to be locked in the closed position. The lock is a sliding lock and is disposed inside the container.

According to a first aspect of the present invention, there is provided a container comprising a base portion and a lid portion moveable between open and closed positions, a pair of locking members located within the container each movable between a locked position in which it engages part of both the base portion and lid portion, when in the closed position, so as to prevent them being moved to the open position and an unlocked position in which it does not prevent the base and lid portions being moved to the open position, the locking members each having an actuating portion for interacting directly with an actuating device inserted into the container through an aperture therein, said interaction causing both of the locking members to move from the unlocked position to the locked position, the actuating portions being located within the container adjacent opposite sides of said aperture, wherein the locking members are each bolts slidably mounted in the base portion, the actuating portions of the locking members are spaced apart by a distance less than the width of said aperture when in the unlocked position so they are engaged by the actuating member when said actuating member is inserted into said aperture, the locking members comprise resilient means for resiliently biasing the locking members towards the unlocked position, the resilient means comprising a resilient arm extending from each locking member, the distal end of which is mounted in locating means provided on the base portion, wherein each resilient arm is Integrally formed with the bolt.

Preferably, the lid and base portions are hingedly connected by a spine portion, the locking members being arranged to engage the base and lid portions in the vicinity of corners of the container.

Preferably, said aperture is provided in a side of the container opposite said spine portion.

Preferably, the lid and base portions have side walls which overlap in the closed position.

Preferably, said locking device is releasable magnetically.

Preferably, the container has holding means for holding one or more disks via the central aperture(s) thereof.

Preferably, the container has holding means for holding one or more disks at their periphery.

Preferably, the holding means comprises a blocking member pivotable between a locked position in which it prevents a disk from sliding out of the holding means and an unlocked position, the blocking means being movable to the locked position by said activating device upon insertion of the activating device into the apparatus.

Preferably, the container in combination with an actuating device for inserting into said aperture.

Preferably, the actuating device has a first arm for engaging the lid portion and a second arm for engaging the base portion so as to hold the lid and base portion in the closed position when it is inserted therein.

Preferably, the actuating device comprises a locking device for releasably securing it within the container.

Preferred and optional features of the invention will be apparent from the following description and from the subsidiary claims of the specification.

The invention will now be further described, merely by way of example, with reference to the accompanying drawings, in which:
Figure 1 is a perspective view of part of a container according to a first embodiment of the invention showing a locking member and an actuating device inserted into the container;
Figure 2 is a plan view of the part of the container shown in Figure 1 and of the locking member showing the actuating member prior to insertion into the container;
Figure 3 is a perspective view of part of the container shown in Figures 1 and 2 showing an aperture therein, actuating portions of a pair of locking members and the actuating member prior to inserting into the container;
Figure 4 is a plan view corresponding to Figure 2 but showing the actuating member inserted into the container;
Figure 5 is a perspective view of the container shown in Figures 1-4 in an open position; and

Figure 6 is a perspective view of a container according to a second embodiment of the invention in an open position.

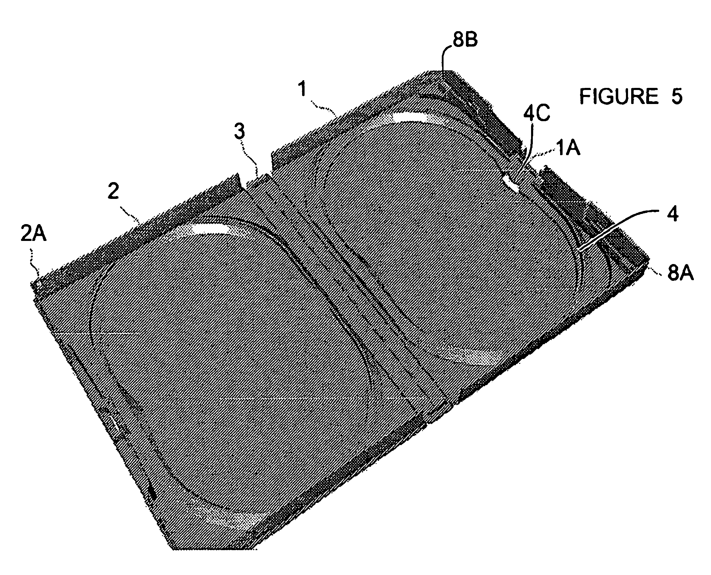

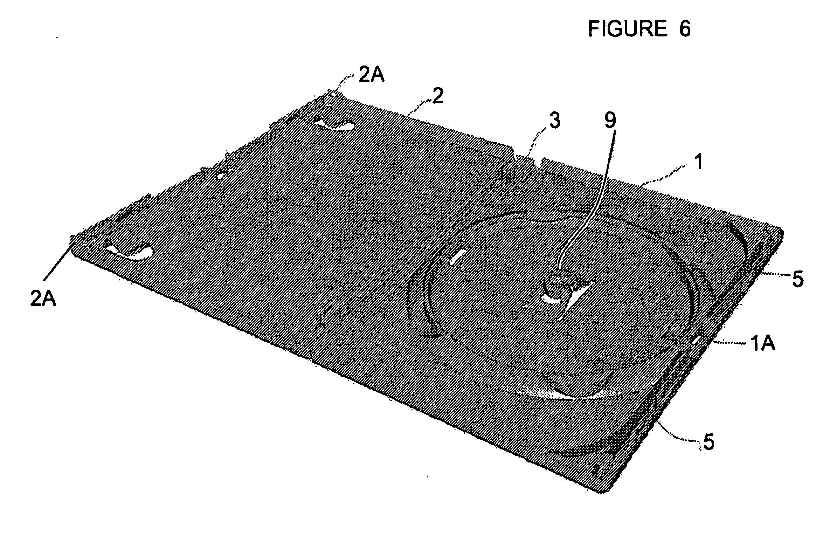

The containers shown in the drawings are designed for holding one or more discs, e.g. CDs or DVDs and comprise a base portion 1, a lid portion 2 and spine portion 3 connecting the base portion 1 and the lid portion 2 (see Figures 5 and 6).

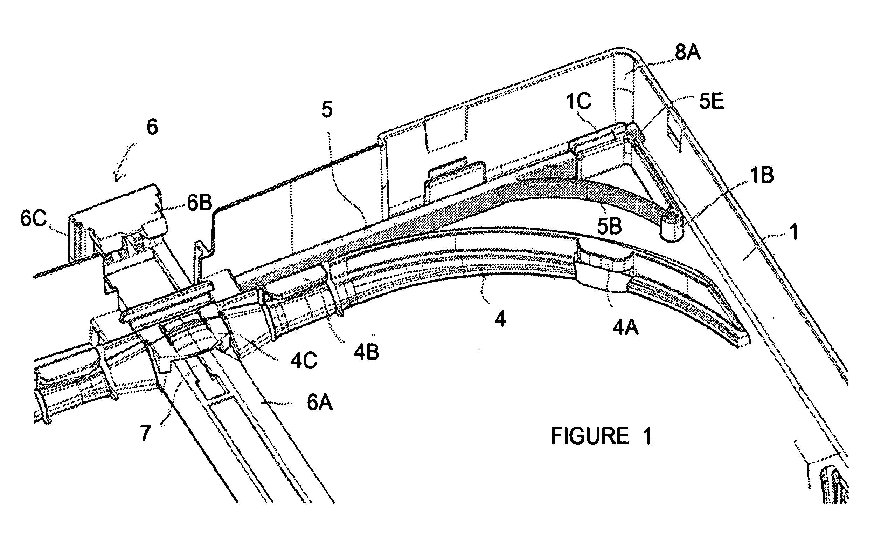

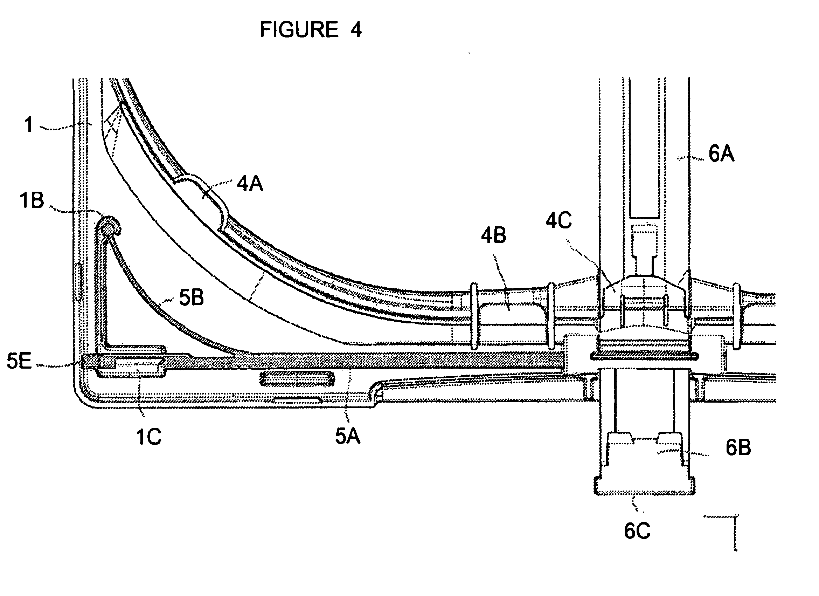

The container shown In Figures 1-5 has holding means 4 for holding discs, the holding means 4 comprising an upstand which is provided with overhanging portions 4A, 48 under which the periphery of a disk can be slid. This type of holding means is described further in WO2006/134383. As shown in Figure 5, similar holding means 4 may be provided in both the base portion 1 and the lid portion 2 of the container.

Figure 1 also shows one of a pair of locking members 5 (which will be described further below) and an actuating member 6 inserted into the container. The actuating member 6 is very similar to the insertable security device described in WO02/39451 referred to above and the description thereof is incorporated herein.

The actuating member 6 comprises a first long arm 6A and a second short arm 68 each extending from a head portion 6C. The actuating member is insertable into a container through apertures or slots therein so that the long arm 6A engages the base portion 1 and the short arm engages the lid portion 6 with the head portion 6C lying adjacent an outer surface of the container (typically within a finger recess). The long arm 6A carries a magnetic locking device (not shown) in the region indicated by reference numeral 7 which locks the long arm 6 to the base portion 1 once the long arm 6A has been fully inserted into the container. When the member 6 is inserted into a closed container it thus serves to lock the lid and base portion 1, 2 in the closed position and can only be released upon application of the container to a special magnetic release device which releases the magnetic lock so the member 6 can be withdrawn from the container.

As shown in Figure 5, the member 6 is inserted into the container through an aperture or slot 1A positioned midway along a side wall of the base portion 1 opposite the spine portion 3. Whilst this can be very effective in locking the container in the closed position, due to the position of the engagement between the arms 6A, 6B of the member 6 and the container, the corners 8A, 8B of the container remote from the spine portion 3 remain vulnerable to being prised open, e.g. by insertion of a knife blade between the base portion 1 and lid portion 2 In the vicinity of these corners.

To counteract this, the present invention provides a pair of additional locking members 5. In the embodiment shown, each of the locking members 5 comprises a rod 5A extending from adjacent the aperture 1A in the base portion to one of the corners 8A, 8B. Each rod 5A is also provided with a curved resilient arm 5B extending from part way along the length of the rod 5A, the outer end 5C of the resilient arm 5B being located within a mounting 1B upstanding from the base portion 1.

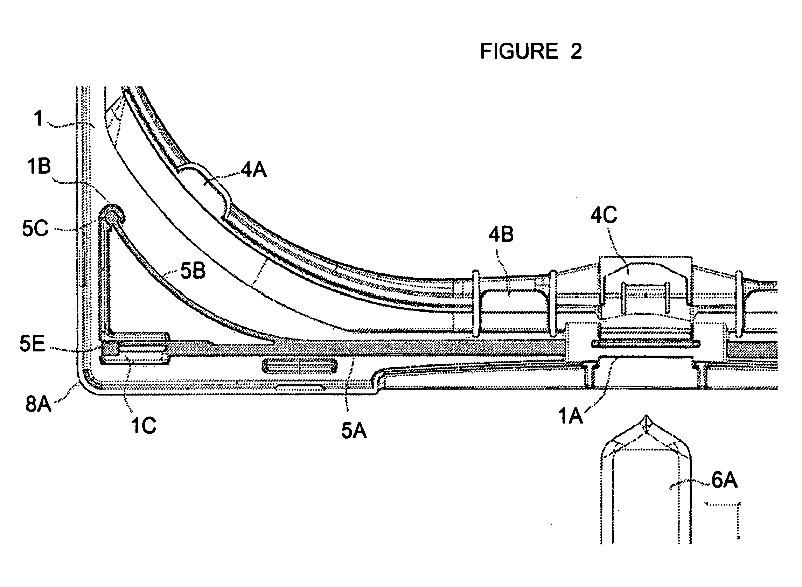

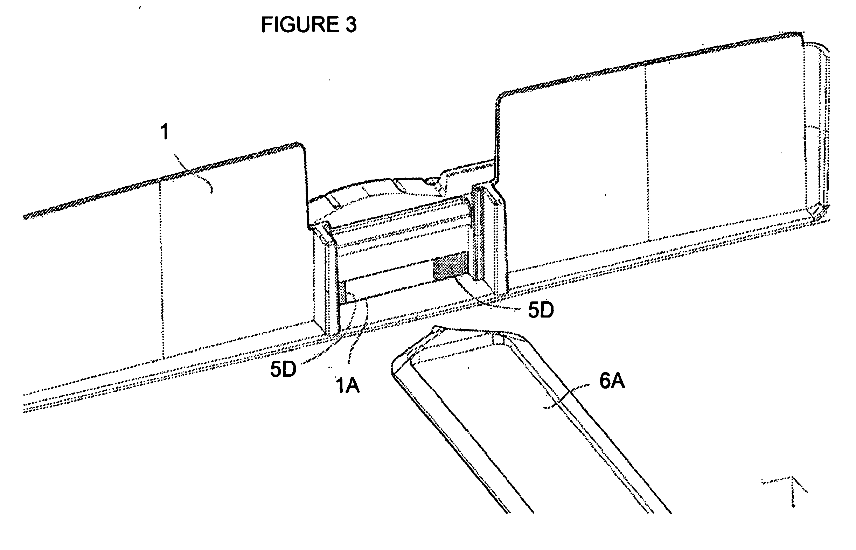

The inner ends 5D of the locking members 5 form actuating portions which are located adjacent opposite sides of the aperture 1A as shown in Figure 3. In the unlocked position (shown in Figures 2 and 3), the ends 5D are spaced from each other by a distance less than the width of the aperture 1A and the outer ends 5E of the rods 5A are retracted within a slot of an upstand 1C provided on the base portion. In this position, the locking members 5 do not engage the lid portion 2 so do not prevent the lid portion 2 from moving between the open and closed positions.

When the actuating member 6 is inserted into the container through the slot 1A, the sides of the long arm 6A thereof engage the Inner ends 5D of the rods 5A and so push the rods 5A outwards towards the respective corners 8A, 8B. The outer ends 5E of the rods 5A then each engage with an aperture 2A adjacent each corner of the lid portion 2 (see Figure 5). The rods 5 thus act as bolts securing the corners of the base and lid portion 1 and 2 in the closed position.

Thus, the arms 6A and 6B of actuating member 6 serve to secure the lid and base portion 1, 2 together in the central region of the side of the container opposite the spine portion 3 and the locking members 5 are pushed outwards by the actuating member 6 so as to secure the lid and base portions 1, 2 together in the vicinity of the corners 8A, 8B. The security of the locking arrangement is thus enhanced.

In the embodiments shown, side walls of the base and lid portions 1, 2 overlap each other when in the closed position so that the apertures 2A in the side walls of the lid portion 2 are aligned with the outer ends 5E of the locking members 5 whereby they are engaged by the locking members 5 when these are pushed outwardly by insertion of the locking member 6.

Other forms of locking member and/or apertures in the lid portion may be provided to ensure the corners of a clam-shell container in which the side walls of the lid and base portion abut each other (rather than overlap each other) can be locked in a similar manner.

When the locking members 5 are pushed outwardly, the curved arms 5B thereof are flexed so that when the actuating member 6 is withdrawn, the locking members 5 automatically move back to their unlocked positions as the resilience of the arms 5B causes them to move back to an unstressed position. Other forms of resilient means may be used to provide a similar function.

As indicated above, disks are instailed and removed from the upstand 4 by sliding beneath overhanging portions 4A and 4B. To prevent a disk sliding out from its retained position, e.g. if the apparatus is dropped or subject to shock load, a pivotable blocking member 4C is provided on the upstand. In the position shown in Figure 1, the blocking member 4C lies adjacent the edge of a disk retained by the upstand 4 so as to block sliding movement of the disk out from beneath the overhanging portions 4A, 4B in a similar manner to the locking device shown in WO2006/134383 referred to above. This can be arranged so that, when it is desired to slide a disk out, it is pivoted upwards away from the edge of the disk so the disk is free to be slid out.

Alternatively, the blocking member 4C may be arranged to pivot downwards, towards the bottom of the base portion 1 (and not upwards) to move it away from the edge of the disk. This has the advantage that when the activating member 6 is inserted into the apparatus, the long arm 6A thereof automatically lifts the blocking member 4C to the locked position. Furthermore, the activating member 6 thus holds the blocking member 4C in the locked position so it cannot be pivoted to an unlocked position until after the activating member 6 has been unlocked and withdrawn from the apparatus. Preferably, when the activating member is withdrawn, the blocking member pivots downwards to an unlocked position by its own resilience or the resilience of its connection to the upstand 4.

The apparatus shown in Figures 1-5 is arranged to hold two disks which are slid out in opposite directions: both being slid towards the centre of the base portion. As in WO2006/134383, the blocking means preferably lies adjacent the edges of both disks and so prevents both from sliding out inadvertently.

Figure 6 shows a similar arrangement of side bolts which are arranged to be actuated by insertion of an actuating member, such as the removable security device described in WO02/39451, but In a container having holding means arranged to hold a disk by means of a hub 9 which engages a central aperture of the disk (as also described in WO02/39451). It will be appreciated that, in this type of container, the long arm 6A of the actuating member may fulfill a further function, namely to fit beneath the hub 9 so that the hub 9 cannot be depressed to release the disk until the actuating member has been withdrawn. Again, this is described in greater detail in WO02/39451).

in Figure 6, the lid and base portions 1, 2 abut each other in the form of a clam shell when in the closed position. The apertures 2A are thus provided on projecting portions which overlap with the sides of the base portion 1 in the closed position.

As described above, the actuating member 6 preferably serves to lock the lid and base portions 1, 2 together itself (either by having two arms which respectively engage the lid and base portion as illustrated or by having one or more arms which fit within aligned apertures in the base and lid portions, e.g. in overlapping side walls thereof). However, it is other arrangements (not shown), the actuating member may not provide this locking function although it is still arranged to actuate locking members in the form of side bolts such as those described above.

As mentioned above, the actuating member is preferably secured within the container by means of a locking device which can be deactivated by applying one or more magnetic fields in appropriate positions. However, other forms of locking device may be used, e.g. a mechanical lock requiring a special mechanical tool to be applied to the container, e.g. to release one or more detents.

A similar arrangement of side bolts which are arranged to be actuated by insertion of an actuating member of the type described may be used to lock containers for other articles, e.g. other forms of data storage media or healthcare products.

Whilst the embodiments described above use a direct mechanical interaction between both the actuating member and the locking members to move the latter to their locked positions, other forms of interaction may be used within the scope of the appended claims.

## Claims

1. A container comprising a base portion (1) and a lid portion (2) moveable between open and closed positions, a pair of locking members (5) located within the container each movable between a locked position in which it engages part of both the base portion (1) and lid portion (2), when in the closed position, so as to prevent them being moved to the open position and an unlocked position In which it does not prevent the base (1) and lid (2) portions being moved to the open position, the locking members (5) each having an actuating portion (5D) for interacting directly with an actuating device (6) insertable into the container through an aperture (1A) therein, said interaction causing both of the locking members (5) to move from the unlocked position to the locked position, the actuating portions (5D) being located within the container adjacent opposite sides of said aperture (1A), wherein each locking member (5) comprises a bolt slidably mounted in the base portion (1), the actuating portions (5D) of the locking members (5) are spaced apart by a distance less than the width of said aperture (1A) when in the unlocked position so that they are engaged by the actuating member (6) when said actuating member (6) is inserted into said aperture (1A), **characterised in that** each locking member (5) comprises a resilient means (5B) for resiliently biasing the locking member (5) towards the unlocked position, each resilient means (5B) comprising a resilient arm extending from each locking member (5), the distal end (5C) of each resilient arm is mounted in locating means (1B) provided on the base portion (1), wherein each resilient arm is integrally formed with the bolt.

2. A container as claimed in claim 1 in which the lid (1) and base (2) portions are hingedly connected by a spine portion (3), the locking members (5) being arranged to engage the base (1) and lid (2) portions in the vicinity of corners of the container.

3. A container as claimed in claims 1 or 2 in which said aperture (1A) is provided in a side of the container opposite said spine portion (3).

4. A container as claimed in any preceding claim in which the lid (1) and base (2) portions have side walls which overlap in the closed position.

5. A container as claimed in any preceding claim having holding means for holding one or more disks via the central aperture(s) thereof.

6. A container as claimed in any preceding claim having holding means (4) for holding one or more disks at their periphery.

7. A container as claimed in claim 6 in which the holding means (4) comprises a blocking member (4C) pivotable between a locked position In which it prevents a disk from sliding out of the holding means (4) and an unlocked position, the blocking means (4C) being movable to the locked position by said activating device upon insertion of the activating device (6) into the apparatus.

8. A container system comprising a container as claimed in any preceding claim in combination with an actuating device (6) for inserting into said aperture.

9. A container system as claimed in claim 8 in which the actuating device has a first arm (6A) for engaging the lid portion (1) and a second arm (6B) for engaging the base portion (2) so as to hold the lid (1) and base (2) portion in the closed position when it is Inserted therein.

10. A container system as claimed in claims 8 or 9 in which the actuating device (6) comprises a locking device for releasably securing it within the container.

11. A container system as claimed in claim 10 in which said locking device is releasable magnetically.

12. A package comprising a container according to claims 1 to 11, and one or more articles contained within the container.

## Patentansprüche

1. Behälter, der einen Basisabschnitt (1) und einen Deckelabschnitt (2) umfasst, die beweglich zwischen geöffneten und geschlossenen Positionen sind, ein Paar Verriegelungselemente (5), die innerhalb des Behälters angeordnet sind und jeweils beweglich sind zwischen einer verriegelten Position, in der sie sowohl einen Teil des Basisabschnitts (1) als auch des Deckelabschnitts (2) in Eingriff nehmen, wenn diese in der geschlossenen Position sind, um sie daran zu hindern, in die geöffnete Position bewegt zu werden, und einer entriegelten Position, in der sie die Basis- (1) und Deckelabschnitte (2) nicht daran hindern, in die geöffnete Position bewegt zu werden, wobei die Verriegelungselemente (5) jeweils einen Betätigungsabschnitt (5D) aufweisen und zwar zum direkten Interagieren mit einer Betätigungseinrichtung (6), die in den Behälter durch eine Öffnung (1A) einsetzbar ist, und wobei die Interaktion beide Verriegelungselemente (5) veranlasst, sich von der entriegelten Position in die verriegelte Position zu bewegen, wobei die Betätigungsabschnitte (5D) innerhalb des Behälters benachbart zu entgegengesetzten Seiten der Öffnung (1A) angeordnet sind, und wobei jedes Verriegelungselement (5) aus einem Riegel besteht, der gleitbar in dem Basisabschnitt (1) befestigt ist, wobei die Betätigungsabschnitte (5D) der Verriegelungselemente (5) in einem Abstand angeordnet sind, der geringer ist als die Breite der Öffnung (1A), wenn sie sich in der entriegelten Position befinden, so dass sie durch das Betätigungselement (6) in Eingriff genommen sind, wenn das Betätigungselement (6) in die Öffnung (1A) eingesetzt ist, **dadurch gekennzeichnet, dass** jedes Verriegelungselement (5) ein elastisches Mittel (5B) zur elastischen Vorspannung des Verriegelungselementes (5) in Richtung der entriegelten Position umfasst, und wobei jedes elastische Mittel (5B) einen elastischen Arm umfasst, der sich von jedem Verriegelungselement (5) erstreckt, und wobei das distale Ende (5C) jedes elastischen Arms in Anordnungsmitteln (1B) befestigt ist, die an dem Basisabschnitt (1) bereitgestellt sind, wobei jeder elastische Arm integral mit dem jeweiligen Verriegelungselement (5) ausgebildet ist.

2. Behälter gemäß Anspruch 1, in dem die Deckel- (2) und Basisabschnitte (1) durch einen Rückenabschnitt (3) gelenkig verbunden sind, wobei die Verriegelungselemente (5) so angeordnet sind, um die Basis- (1) und Deckelabschnitte (2) in der Nähe der Behälterecken in Eingriff zu nehmen.

3. Behälter gemäß Anspruch 1 oder 2, in dem die Öffnung (1A) an einer Seite des Behälters bereitgestellt ist, die dem Rückenabschnitt (3) entgegengesetzt ist.

4. Behälter gemäß einem der vorherigen Ansprüche, in dem die Deckel- (2) und Basisabschnitte (1) Seitenwände aufweisen, die sich in der geschlossenen Position überlappen.

5. Behälter gemäß einem der vorherigen Ansprüche, der Haltemittel (4) aufweist, und zwar zum Halten einer oder mehrerer Scheiben mittels deren zentralen Öffnung(en).

6. Behälter gemäß einem der vorherigen Ansprüche, der Haltemittel (4) aufweist, und zwar zum Halten einer oder mehrerer Scheiben an deren Peripherie.

7. Behälter gemäß Anspruch 6, in dem die Haltemittel (4) ein Sperrelement (4C) umfassen, das schwenkbar zwischen einer verriegelten Position ist, in der es eine Scheibe daran hindert aus den Haltemitteln (4) zu gleiten, und einer entriegelten Position, wobei das Sperrmittel (4C) durch die Betätigungsvorrichtung, nach dem Einsetzen der Betätigungsvorrichtung (6) in die Vorrichtung, in die verriegelte Position beweglich ist.

8. Behältersystem, das einen Behälter gemäß einem der vorherigen Ansprüche umfasst, und zwar in Kombination mit einer Betätigungseinrichtung (6) zum Einsetzten in die Öffnung.

9. Behältersystem gemäß Anspruch 8, in dem die Betätigungseinrichtung einen ersten Arm (6A) zur Ineingriffnahme des Deckelabschnitts (2) und einen zweiten Arm (6B) zur Ineingriffnahme des Basisabschnitts (1) aufweist, um den Deckel- (2) und den Basisabschnitt (1) in der geschlossenen Position zu halten, wenn sie darin eingesetzt ist.

10. Behältersystem gemäß Anspruch 8 oder 9, in dem die Betätigungseinrichtung (6) eine Verriegelungseinrichtung umfasst, und zwar, um sie in dem Behälter freigebbar zu sichern.

11. Behältersystem gemäß Anspruch 10, in dem die Verriegelungseinrichtung magnetisch freigebbar ist.

12. Verpackung, die einen Behälter gemäß den Ansprüchen 1 bis 11 umfasst, und einen oder mehre Gegenstände, die in dem Behälter enthalten sind.

## Revendications

1. Boîtier comprenant une partie de base (1) et une partie couvercle (2) mobile entre des positions ouverte et fermée, une paire d'éléments de verrouillage (5) situés à l'intérieur du boîtier et dont chacun est mobile entre une position verrouillée dans laquelle il se met en prise avec une partie de la partie de base (1) et de la partie mobile (2), dans la position fermée, afin de les empêcher d'être mis dans la position ouverte et une position déverrouillée dans laquelle il n'empêche pas les parties de base (1) et couvercle (2) d'être mises dans la position ouverte, les éléments de verrouillage (5) comportant chacun une partie d'actionnement (5D) pour interagir directement avec un dispositif d'actionnement (6) pouvant être inséré dans le boîtier par une ouverture (1A) prévue dans ce dernier, ladite interaction faisant déplacer les deux éléments de verrouillage (5) de la position déverrouillée vers la position verrouillée, les parties d'actionnement (5D) étant situées dans le boîtier, en une position adjacente à des côtés opposés de ladite ouverture (1A), dans lequel chaque élément de verrouillage (5) comprend un boulon monté de façon glissante dans la partie de base (1), les parties d'actionnement (5D) des éléments de verrouillage (5) sont espacées d'une distance qui est inférieure à la largeur de ladite ouverture (1A) dans la position déverrouillée de sorte qu'elles sont accrochées par l'élément d'actionnement (6) quand ledit élément d'actionnement (6) est inséré dans ladite ouverture (1A), **caractérisé en ce que** chaque élément de verrouillage (5) comprend un moyen résilient (5B) pour solliciter de façon résiliente les éléments de verrouillage (5) vers la position déverrouillée, chaque moyen résilient (5B) comprenant un bras résilient s'étendant depuis chaque élément de verrouillage (5), l'extrémité distale (5C) de chaque bras résilient est montée dans un moyen de positionnement (1B) prévu sur la partie de base (1), dans lequel chaque bras résilient est formé d'un seul tenant avec le boulon.

2. Boîtier selon la revendication 1, dans lequel les parties couvercle (1) et de base (2) sont reliées de façon articulée par une partie dos (3), les éléments de verrouillage (5) étant agencés pour se mettre en prise avec les parties de base (1) et couvercle (2) au voisinage des angles du boîtier.

3. Boîtier selon la revendication 1 ou 2, dans lequel ladite ouverture (1A) est prévue dans un côté du boîtier opposé à ladite partie dos (3).

4. Boîtier selon l'une quelconque des revendications précédentes, dans lequel les parties couvercle (1) et de base (2) ont des parois latérales qui se chevauchent dans la position fermée.

5. Boîtier selon l'une quelconque des revendications précédentes, comportant un moyen de maintien pour immobiliser un ou plusieurs disques par leur ouverture centrale.

6. Boîtier selon l'une quelconque des revendications précédentes, comportant un moyen de maintien (4) pour immobiliser un ou plusieurs disques au niveau de leur périphérie.

7. Boîtier selon la revendication 6, dans lequel le moyen de maintien (4) comprend un élément de blocage (4C) pouvant pivoter entre une position verrouillée dans laquelle il empêche un disque de glisser hors du moyen de maintien (4) et une position déverrouillée, le moyen de blocage (4C) pouvant être mis dans la position verrouillée par ledit dispositif d'actionnement lors de l'insertion du dispositif d'actionnement (6) dans le système.

8. Système de boîtier comprenant un boîtier selon l'une quelconque des revendications précédentes en combinaison avec un dispositif d'actionnement (6) destiné à être inséré dans ladite ouverture.

9. Système de boîtier selon la revendication 8, dans lequel le dispositif d'actionnement comporte un premier bras (6A) destiné à se mettre en prise avec la partie couvercle (1) et un deuxième bras (6B) destiné à se mettre en prise avec la partie de base (2) de manière à maintenir les parties couvercle (1) et de base (2) dans la position fermée quand il y est inséré.

10. Système de boîtier selon la revendication 8 ou 9, dans lequel le dispositif d'actionnement (6) comprend un dispositif de verrouillage permettant de le fixer de manière détachable à l'intérieur du boîtier.

11. Système de boîtier selon la revendication 10, dans lequel ledit dispositif de verrouillage peut être libéré de façon magnétique.

12. Paquet comprenant un boîtier selon les revendications 1 à 11 et un ou plusieurs articles contenus dans le boîtier.
